# FASCICULE DE BREVET EUROPEEN

(11) **EP 2 865 931 B1**
(45) Date de publication et mention de la délivrance du brevet: **01.02.2017**
(21) Numéro de dépôt: 14190547.1
(22) Date de dépôt: 27.10.2014
(51) Int. Cl.: F16L 37/47

(54) **Prise gaz à boisseau**
Gaskugelhahn
Gas connector with plug

(30) Priorité: 25.10.2013 FR 1360463
(43) Date de publication de la demande: 29.04.2015
(73) Titulaire: GDF SUEZ, 92400 Courbevoie (FR); Culture Energy France, 78370 Plaisir (FR)
(72) Inventeur: Rouquier, Philippe, 92700 COLOMBES (FR); Brel, Olivier, 78370 PLAISIR (FR); Maingre, Dominique, 02200 SOISSONS (FR)
(74) Mandataire: Cornuejols, Georges

(56) Documents cités:
- EP-A2- 1 302 715
- EP-A2- 2 058 576
- DE-B- 1 176 938
- DE-B1- 2 216 712
- US-A- 1 850 879
- US-A- 3 100 619

## Description

### DOMAINE TECHNIQUE DE L'INVENTION

La présente invention concerne le domaine des prises gaz, et plus particulièrement une prise gaz à boisseau permettant le raccordement entre une arrivée de fluide gazeux et un appareil fonctionnant avec ledit fluide gazeux.

### ETAT DE LA TECHNIQUE

Actuellement, les prises de gaz sont conçues pour permettre une connexion et une déconnexion rapide entre un réseau d'alimentation de fluide gazeux, notamment de gaz naturel, installé à l'intérieur ou à l'extérieur d'un bâtiment et un appareil fonctionnant avec le fluide gazeux, tel que par exemple une cuisinière à gaz, un barbecue, un parasol ou un éclairage.

Les prises de gaz connues comportent généralement un raccord d'entrée de gaz prévu pour la réalisation d'un raccordement fixe de la prise gaz avec une conduite de gaz fixe. La prise comporte un raccord de sortie de type femelle prévu pour brancher un embout de type mâle connecté par tuyau souple à l'appareil fonctionnant au gaz, et une vanne prévue pour bloquer le fluide en position déconnectée ou assurer la circulation de gaz lorsque l'embout est branché au raccord de sortie de gaz. Les raccords utilisés sont en général des raccords vissés, à baïonnette ou à manette comme celui décrit par exemple dans le brevet ES1014486.

Les raccords utilisés pour ces prises peuvent présenter des problèmes d'étanchéité et de sécurité pour les utilisateurs lors de manipulations fréquentes ou de mauvaise utilisation. Ces solutions présentent également l'inconvénient d'avoir un encombrement important.

Le brevet EP2204600 décrit également une prise gaz sécurisée destinée à être raccordée de manière fixe à un réseau fixe d'alimentation de fluide gazeux, et permettant le branchement et le débranchement d'un embout de raccordement mâle qui alimente en fluide gazeux par tuyau souple un appareil fonctionnant au gaz. La prise gaz comporte un boîtier logeant une vanne rotative qui comporte un corps de vanne et un boisseau sphérique. Le corps de vanne est fixé au boîtier, et comporte du côté amont un raccord d'entrée de fluide gazeux intégré pour raccordement fixe à une conduite fixe d'alimentation de fluide gazeux, et comporte du côté aval un logement de montage intégré pour le montage en rotation du boisseau sphérique. La partie du côté aval du logement de montage comporte une ouverture. Le boisseau sphérique comporte du côté aval, face à l'ouverture de la façade de boîtier, un raccord de sortie de fluide gazeux intégré prévu pour brancher un embout de raccordement mâle. Le boisseau sphérique est conçu pour pivoter entre une position où la vanne est fermée et une position où la vanne est ouverte. L'ouverture verticale allongée dans la façade est conçue pour permettre le branchement de l'embout de raccordement sur le raccord de sortie et le pivotement de l'embout de raccordement lorsque celui-ci est branché sur le raccord de sortie. Le système de verrouillage qui empêche la rotation du boisseau sphérique est conçu pour être déverrouillé par une poussée axiale de l'embout de raccordement sur le raccord de sortie.

Le document EP1606545 décrit également une prise gaz comprenant une douille tubulaire à l'intérieur de laquelle circule le gaz. La douille est munie d'un élément de fermeture dont le coulissement autorise ou pas la circulation du gaz dans la douille. Une poussée de l'élément de l'élément de fermeture par un embout permet d'ouvrir la circulation du gaz.

Bien que les prises décrites précédemment soient sécurisées et permettent une connexion et déconnexion rapide, ces prises présentent l'inconvénient d'être très complexes car composées d'un grand nombre de pièces. Cette complexité en fait des prises compliquées et onéreuses à produire. De plus comme les prises de l'art antérieur décrites précédemment, elles sont est assez encombrantes.

On connaît le document DE2216712B1, qui décrit une prise gaz destinée à être raccordée à un réseau d'alimentation de fluide gazeux et permettant le branchement et le débranchement d'un embout (35) de raccordement qui alimente en fluide gazeux par tuyau un appareil fonctionnant avec ledit fluide gazeux, la prise gaz comportant :
- un corps (1) cylindrique creux dans lequel est inséré un boisseau (2) et
- une arrivée de fluide gazeux.

Le corps (1) creux est ouvert à une extrémité pour permettre l'insertion de l'embout (35) de raccordement. Le boisseau (2) est tubulaire et monté en rotation axiale dans le corps (1) creux. La prise gaz comporte, de plus, des moyens de maintien en position (23, 24, 26, 27) et des moyens de verrouillage (3, 4, 7, 8, 9), configurés pour permettre l'ouverture et la fermeture de l'arrivée du fluide gazeux et le verrouillage de l'embout (55) de raccordement dans le corps (2) de la prise gaz lorsque l'arrivée du fluide gazeux est ouverte. Les moyens de maintien en place sont formés au moins par un ressort (20) fixé, d'une part, à l'intérieur d'un bouton (4) et, d'autre part, à l'extrémité du boisseau (2) opposée à celle disposée au niveau de l'ouverture (23) du corps, le ressort étant configuré de façon maintenir le bouton en contact avec le corps (1). Le bouton (4) est selon ce document un organe de manoeuvre des moyens de maintien en position (ouverte ou fermée) du boisseau.

Par conséquent, dans ce document, une action de l'utilisateur est nécessaire pour ramener le boisseau cylindrique en position fermée.

Le dispositif décrit dans ce document est un dispositif dont le passage entre l'état ouvert et l'état fermé nécessite deux mains, une pour la manipulation de l'embout et l'autre pour la manipulation du bouton. Ce qui impose une manipulation complexe, qui ne garantit pas la sécurité.

Les documents EP1302715, DE1176938, US3100619, EP2058576 et US1850879 présentent les mêmes inconvénients.

### OBJET DE L'INVENTION

La présente invention a donc pour objet de pallier un ou plusieurs des inconvénients de l'art antérieur en proposant la prise gaz et un ensemble de raccordement.

Selon un premier aspect, la présente invention vise une prise gaz destinée à être raccordée à un réseau d'alimentation de fluide gazeux et permettant le branchement et le débranchement d'un embout de raccordement qui alimente en fluide gazeux par tuyau flexible un appareil fonctionnant avec ledit fluide gazeux, la prise gaz comportant :
- un corps cylindrique creux dans lequel est inséré un boisseau et ;
- une arrivée de fluide gazeux,
   le corps creux étant ouvert à une extrémité pour permettre l'insertion de l'embout de raccordement, le boisseau étant tubulaire et monté en rotation axiale dans le corps creux, la prise gaz comportant, de plus, des moyens de maintien en position et des moyens de verrouillage, configurés pour permettre l'ouverture et la fermeture de l'arrivée du fluide gazeux et le verrouillage de l'embout de raccordement dans le corps de la prise gaz lorsque l'arrivée du fluide gazeux est ouverte, caractérisée en ce que les moyens de maintien en place sont formés par un ressort fixé, d'une part à l'intérieur du corps et, d'autre part à l'extrémité du boisseau opposée à celle disposée au niveau de l'ouverture du corps, le ressort étant configuré de façon à ramener le boisseau en position fermée.

Dans des modes de réalisation, les moyens de verrouillage sont formés par un loquet articulé en rotation sur le corps selon un axe de rotation perpendiculaire au corps, comportant une première extrémité du loquet traversant le corps, au niveau d'une première ouverture formée dans le corps de la prise gaz, et comportant une deuxième extrémité, opposée à la première extrémité du loquet traversant le corps au niveau d'une deuxième ouverture formée dans le corps.

Dans des modes de réalisation, le loquet est agencé pour basculer entre une première position de verrouillage dans laquelle la première extrémité du loquet coopère avec le boisseau pour s'opposer à la rotation du boisseau dans le corps et une position de déverrouillage dans laquelle la première extrémité du loquet ne coopère plus avec le boisseau.

Dans des modes de réalisation, la prise gaz comporte sur sa surface extérieure un évidement de forme complémentaire à la première extrémité, la première extrémité du loquet venant coopérer avec ledit évidement pour verrouiller en rotation le boisseau.

Dans des modes de réalisation, les moyens de verrouillage comportent également un dispositif de commande permettant de faire basculer le loquet entre la position de verrouillage et la position de déverrouillage.

Dans des modes de réalisation, une extrémité du boisseau disposée au niveau de l'ouverture du corps de la prise gaz est adaptée pour coopérer avec l'embout de raccordement du tuyau flexible.

Dans des modes de réalisation, l'extrémité du boisseau forme un espace, entre une surface externe du boisseau et une surface interne du corps, dans lequel vient s'insérer l'embout de raccordement.

Dans des modes de réalisation, la prise gaz est configurée pour que la rotation de l'embout permette de verrouiller ladite prise grâce aux moyens de verrouillage.

Dans des modes de réalisation, la deuxième extrémité du loquet est agencée pour coopérer avec la surface extérieure de l'embout lorsque ledit embout est inséré dans la prise afin de bloquer la première extrémité du loquet en contact avec l'évidement, empêchant ainsi toute rotation du boisseau lorsque l'embout est inséré.

Selon un deuxième aspect, la présente invention vise un ensemble de raccordement entre un réseau de distribution de fluide gazeux et un appareil fonctionnant avec ledit fluide gazeux, comportant une prise gaz objet de la présente invention.

Dans des modes de réalisation, l'embout comporte une pointe diamant saillante de l'embout et l'extrémité du boisseau disposée au niveau de l'ouverture du corps comporte une encoche de forme complémentaire à la pointe diamant, la pointe diamant et l'encoche coopérant pour solidariser en rotation l'embout et le boisseau lorsque l'embout est associé avec l'extrémité du boisseau.

Dans des modes de réalisation, l'embout comporte, sur la surface extérieure, une collerette venant en saillie de ladite surface extérieure et formant une rainure annulaire non continue, ladite collerette étant agencée pour coopérer avec la deuxième extrémité du loquet de sorte que lorsque l'embout est inséré dans la prise gaz et lorsque ladite prise gaz est ouverte, la deuxième extrémité du loquet bloque le retrait de l'embout.

### BREVE DESCRIPTION DES FIGURES

D'autres buts, caractéristiques et avantages de l'invention seront mieux compris et apparaîtront plus clairement à la lecture de la description faite, ci-après, en se référant aux figures annexées et données à titre d'exemple :
- la figure 1 est une représentation schématique d'une coupe longitudinale d'un mode de réalisation du dispositif selon l'invention,
- la figure 2 est une représentation schématique d'une coupe longitudinale d'un mode de réalisation du dispositif selon l'invention avec embout, en position fermée,
- la figure 3 est une représentation schématique d'une coupe longitudinale d'un mode de réalisation du dispositif selon l'invention avec embout, en position ouverte,
- la figure 4 est représentation schématique d'une vue en perspective de l'embout utilisé avec le dispositif selon l'invention.

### DESCRIPTION D'EXEMPLES DE REALISATION DE L'INVENTION

La présente invention concerne une prise gaz destinée à être raccordée à une arrivée de fluide gazeux pour permettre le branchement et le débranchement d'un conduit de circulation du fluide gazeux, le conduit de raccordement permettant d'amener le fluide gazeux à un appareil fonctionnant avec ledit fluide gazeux.

Dans des modes de réalisation, le fluide gazeux est du gaz combustible, par exemple du gaz naturel.

Dans des modes de réalisation, le fluide gazeux est un autre fluide gazeux, par exemple comportant de l'oxygène ou du gaz inerte comme l'azote ou l'argon.

Dans des modes de réalisation, la prise gaz de la présente invention est particulièrement adaptée pour des pressions de fluide gazeux allant jusqu'à 50 hectopascals (50 millibars). Toutefois, la prise gaz de la présente invention peut également être utilisée pour des pressions de gaz supérieures à 50 millibars ou négatives.

Le conduit de circulation du fluide gazeux est constitué d'un tuyau de type flexible bien connu de l'homme du métier. Ce conduit ou tuyau permet de raccorder en amont la prise gaz et en aval l'appareil d'utilisation. Le tuyau flexible comporte à son extrémité un embout de raccordement qui permet le raccord du tuyau flexible à la prise gaz.

Dans des modes de réalisation, la prise gaz concernée par la présente invention est un robinet à boisseau tubulaire intégrant un obturateur automatique. Le boisseau tubulaire assure la commande d'ouverture et de fermeture d'arrivée du fluide gazeux, par la rotation axiale du raccord d'extrémité du tuyau flexible reliant la prise gaz à l'appareil utilisant le fluide gazeux.

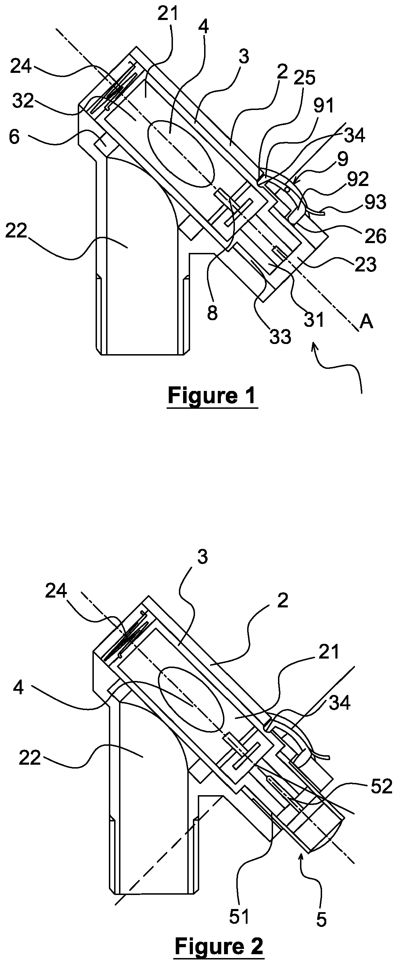

Comme illustré sur les figures 1 à 3, le robinet de la prise gaz 1 est un système d'ouverture et de fermeture permettant de laisser ou de ne pas laisser passer le fluide gazeux via une ouverture 4 permettant le passage du fluide gazeux. Dans le cadre de l'invention, la position ouverte indique que le fluide gazeux circule à travers le robinet, et la position fermée indique que le fluide gazeux ne peut pas circuler à travers le robinet pour arriver jusqu'à l'embout 5 de raccordement du tuyau flexible.

Le robinet comporte un corps 2 à l'intérieur duquel est disposé un boisseau 3. Le boisseau 3 est un élément creux comportant un passage 32 permettant de laisser passer le fluide gazeux via l'ouverture 4 permettant le passage du fluide gazeux. Dans le cadre de la présente invention, ce boisseau 3 est tubulaire.

Le corps 2 de la prise gaz 1 et le boisseau 3 tubulaire peuvent être fabriqués dans n'importe quel matériau métallique approprié pour une utilisation dans une prise gaz 1.

La figure 2 illustre un mode de réalisation de l'invention, dans lequel la prise gaz 1 est utilisée avec un embout 5 de raccordement du tuyau flexible configuré pour coopérer avec le boisseau 3. Lors de sa rotation, l'embout 5 entraîne le boisseau 3 en rotation pour ouvrir ou fermer l'arrivée du fluide gazeux. Ainsi le boisseau 3 est configuré pour, d'une part permettre ou empêcher le passage du fluide gazeux, et d'autre part bloquer l'embout 5 dans la prise gaz 1 lorsque le passage du fluide gazeux est possible.

Pour cela, la prise gaz 1 est formée d'un corps 2 creux de forme allongée et dont une partie 21 comporte un prolongement selon un angle prédéfini pour former un autre conduit 22 d'arrivée de fluide gazeux. Ce corps 2 creux allongé est ouvert à une extrémité 23 pour permettre l'insertion de l'embout 5.

Le conduit 22 d'arrivée du fluide gazeux est configuré pour s'adapter sur une alimentation en fluide gazeux. Selon un mode de réalisation de l'invention, le conduit 22 d'arrivée du fluide gazeux est configuré pour s'adapter sur une conduite fixe d'alimentation de fluide gazeux.

Dans des modes de réalisation, le conduit 22 d'arrivée du fluide gazeux se connecte à tout type de conduite fixe d'alimentation au moyen d'un adaptateur approprié (non illustré sur les figures).

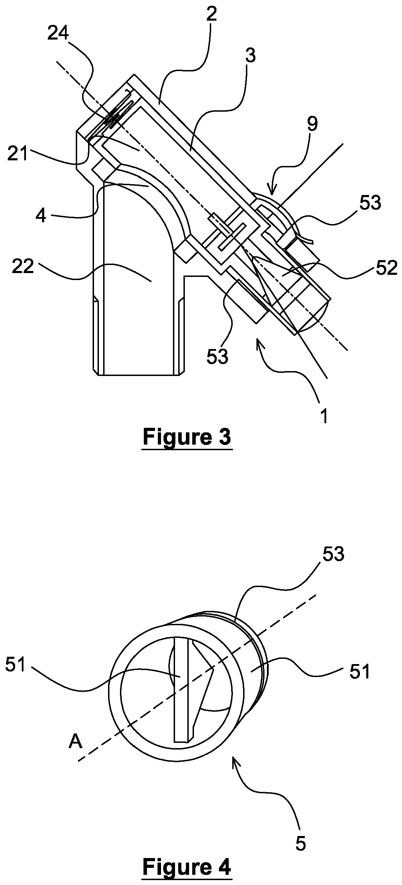

A l'intérieur du corps 2 de la prise gaz 1 est disposé le boisseau 3 tubulaire. Le boisseau 3 est monté en rotation autour d'un axe parallèle à l'axe A longitudinal du boisseau dans le corps 2 creux. La forme du boisseau 3 tubulaire est ainsi complémentaire de la forme interne du corps 2 creux. Au niveau de la partie allongée du corps de la prise, le boisseau 3 comporte une ouverture 4 qui permet l'arrivée du fluide gazeux. L'ouverture 4 du boisseau 3 débouche ainsi dans le conduit 22. Le boisseau 3 tubulaire est donc monté en rotation à l'intérieur du corps 2 de la prise gaz 1 de manière à pouvoir pivoter entre, une première position dans laquelle l'arrivée de fluide gazeux est fermée (figure 2) et une deuxième position (figure 3) dans laquelle l'arrivée de fluide gazeux est ouverte.

Avantageusement, les moyens de maintien en position comprennent des moyens permettant le maintien en position ouverte du boisseau 3. Ces moyens sont préférentiellement de type baïonnette : l'épaulement du boisseau 3 reposant sur le fond du lamage du corps 2 comporte un tenon rapporté alors que le fond du lamage comporte au moins une forme complémentaire au tenon, par exemple une encoche. L'encoche est agencée de sorte que lorsque le boisseau 3 est en position ouverte, le tenon coopère avec l'encoche pour maintenir le boisseau en position ouverte malgré la tension du ressort 24 qui tend à ramener le boisseau en position fermée.

Pour engager ou dégager le tenon de l'encoche, l'utilisateur doit pousser avec l'embout sur le boisseau 3 de façon à écarter l'épaulement du boisseau 3 du fond du lamage du corps 2 de la prise. Le tenon étant dégagé de l'encoche, l'utilisateur peut tourner le boisseau 3.

Avantageusement, le corps 2 comporte une deuxième encoche permettant de recevoir le tenon lorsque le boisseau 3 est en position fermée afin de permettre le contact entre l'épaulement du boisseau 3 et le fond du lamage du corps 2.

Le système de tenon encoche est donnée ici à titre d'exemple, d'autres systèmes de maintien en position étant connus de l'homme du métier.

Dans des modes de réalisation, l'extrémité 31 du boisseau 3 disposée au niveau de l'ouverture 23 du corps 2 de la prise gaz 1 est adaptée pour coopérer avec l'embout 5 du tuyau flexible. Pour cela, l'extrémité 31 du boisseau disposée au niveau de l'ouverture 23 du corps de la prise gaz 1 est formée par un tube dont le diamètre est inférieur à celui du corps principal du boisseau 3. A cette extrémité, le boisseau 3 n'est donc pas en contact avec la surface interne du corps 2. L'espace 33 ainsi ménagé entre la surface externe du boisseau 3 et la surface interne du corps 2 permet l'insertion de l'embout 5 du flexible, l'embout 5 comportant à son extrémité, comme illustré en figures 2 et 3, une portion tubulaire de forme complémentaire à l'espace 33 de la prise.

De plus, l'extrémité 31 du boisseau 3 peut comporter, sur sa surface extérieure ou à son extrémité, des moyens d'étanchéité (non représentés) afin d'assurer l'étanchéité entre le boisseau 3 et l'embout 5. Ces moyens d'étanchéité peuvent comporter des joints d'étanchéité de type toriques.

Dans des modes de réalisation, le corps 2 de la prise gaz 1 comporte des moyens 9 de verrouillage de l'embout 5 du flexible. Ces moyens sont de type loquet. Le loquet 9 est articulé en rotation sur le corps 2 selon un axe de rotation perpendiculaire au corps 2, et plus précisément perpendiculaire à l'axe A. Le loquet 9 comporte une première extrémité 91 traversant le corps 2, au niveau d'une première ouverture 25 formée dans le corps 2 de la prise, et comporte une deuxième extrémité 92, opposée à la première extrémité 91 et traversant le corps 2 au niveau d'une deuxième ouverture 26 formée dans le corps 2. Le loquet 9 est agencé pour basculer entre une première position de verrouillage dans laquelle la première extrémité 91 du loquet 9 coopère avec le boisseau 3 pour s'opposer à la rotation du boisseau 3 dans le corps 2 et une position de déverrouillage dans laquelle la première extrémité 91 du loquet 9 ne coopère plus avec le boisseau 3.

De plus, le loquet 9 comporte des moyens de rappel en position, par exemple de type ressort couple articulé selon l'articulation du loquet, afin de maintenir le loquet 9 en position de verrouillage.

Les moyens de verrouillage comportent également un dispositif 93 de commande. Ce dispositif 93 de commande permet de faire basculer manuellement le loquet 9 entre la position de verrouillage et la position de déverrouillage façon à ce que la première extrémité 91 coopère ou ne coopère pas, respectivement, avec le boisseau 3. Lorsque la première extrémité 91 coopère avec le boisseau 3, la première extrémité 91 entraîne le boisseau 3 en rotation.

La première extrémité 91 des moyens 9 de verrouillage est configurée pour dépasser à l'intérieur du corps 2 de la prise gaz 1 et reposer sur la surface externe du boisseau 3. Le boisseau comporte ainsi en regard de la première 25 ouverture, lorsqu'il est en position fermé, un évidemment 34 adaptée à la taille de la première 91 extrémité des moyens 9 de verrouillage.

Dans des modes de réalisation, la position de cet évidemment 34 par rapport à l'ouverture 4 du boisseau 3 forme un angle de 90 degrés dans un plan perpendiculaire à l'axe A.

Dans des modes de réalisation, la longueur du boisseau 3 est inférieure à celle du corps 2 de la prise gaz 1. C'est-à-dire que l'extrémité du corps 2 de la prise gaz 1, comportant l'ouverture 23 et permettant l'insertion de l'embout 5 du tuyau flexible, dépasse de celle du boisseau. Ainsi, l'ouverture 23 du corps 2 peut être obturée par un clapet amovible, par exemple basculant.

Le boisseau 3 est maintenu en place dans le corps 2 de la prise gaz 1 par des moyens de maintien en place. Selon un mode de réalisation de l'invention, ces moyens de maintien en place comportent un ressort 24 fixé, d'une part à l'intérieur du corps 2 et, d'autre part à l'extrémité du boisseau opposée à celle disposée au niveau de l'ouverture 23 du corps. Plus précisément, le ressort 24 est fixé par une de ses extrémités sur le fond 27 du corps 2 et par son autre extrémité au boisseau 3 afin de générer un couple entre le corps 2 et le boisseau 3. Le ressort 24 est configuré de façon à maintenir le boisseau en position fermée. Il est nécessaire d'exercer un effort sur le ressort pour que le boisseau soit en position ouverte et laisse passer le fluide gazeux. Lorsque la prise gaz 1 est en position ouverte, le loquet 9 bloque le boisseau 3 en position ouverte en s'opposant au rappel du ressort 24.

Les moyens de maintien en place peuvent également comporter un lamage 26, ménagé dans le corps 2 à proximité de l'ouverture 23 et un épaulement ménagé sur le boisseau 3, le lamage 26 et l'épaulement coopérant afin que le boisseau 3 vienne en appui sur le corps 2. De plus, le ressort 24 exerce une pression axiale sur le boisseau 3 afin de maintenir l'épaulement du boisseau 3 en contact ave le lamage 26 du corps 2.

Préférentiellement, les moyens de maintien en place comprennent deux butées (non représentées), une première butée de fermeture et une deuxième butée d'ouverture. Les butées sont insérées préférentiellement entre l'épaulement et le lamage 26 afin de ne permettre la rotation du boisseau qu'entre la position d'ouverture, dans laquelle le boisseau vient en butée d'ouverture, et la position de fermeture, dans laquelle le boisseau vient en butée de fermeture. Les butées peuvent être réalisées par l'ajout d'éléments entre le lamage 24 et l'épaulement ou par usinage des formes adéquates dans le boisseau 3 et le corps 2.

La prise gaz 1 comporte également un joint 6 disposé au niveau de l'ouverture 4 du boisseau 3 et de la conduite 22 d'arrivée de gaz. Ce joint 6 permet d'assurer l'étanchéité entre le corps 2 de la prise gaz 1 et le boisseau 3. De cette façon, lorsque le fluide gazeux arrive par la conduite 22 d'arrivée de fluide gazeux, il ne peut pas circuler entre la surface interne du corps 2 de la prise gaz 1 et la surface externe du boisseau 3. Le fluide est donc obligatoirement dirigé à l'intérieur 32 du boisseau 3.

Dans des modes de réalisation, n'importe quel autre dispositif permettant d'assurer l'étanchéité entre le corps de la prise gaz 1 et le boisseau 3 peut être utilisé.

Dans des modes de réalisation, l'embout 5 utilisé avec la prise gaz 1 comporte des moyens de coopération avec l'extrémité 31 du boisseau 3. Ces moyens de coopération permettent la mise en rotation du boisseau 3 par la simple rotation de l'embout 5.

Plus précisément, l'embout 5 du flexible est un embout classique formé par un tube 51 creux. Il comporte à son extrémité, à l'intérieur du tube 51, une pointe diamant 52. Cette pointe diamant 52 est en forme de triangle plat fixé par deux de ses sommets. Le diamètre de l'embout est configuré pour permettre l'insertion de la pointe diamant 52 dans l'espace interne à l'extrémité 31 du boisseau 3. La pointe diamant 52 vient ainsi en appui sur le rebord du boisseau 3. Selon un mode de réalisation particulier, l'extrémité 31 du boisseau 3 comporte une rainure ménagée dans la surface interne de l'extrémité 31 du boisseau 3. La rainure est de forme complémentaire à la pointe diamant 52, les deux coopérants pour lier en rotation l'embout 5 et le boisseau 3. Ainsi, lorsque l'embout 5 est introduit dans la prise 2, la rotation de l'embout 5 entraîne la rotation du boisseau 3.

La prise gaz 1 comporte, de plus, des moyens de retenus destinés à maintenir le loquet 9 en position verrouillée, et par extension l'embout 5 dans la prise gaz 1, lorsque l'embout 5 est introduit dans la prise gaz 1. Les moyens de retenu comportent l'extrémité 92 du loquet 9 qui est agencée pour coopérer avec une collerette 53 lorsque l'embout 5 est introduit dans la prise gaz 1, l'extrémité 92 venant alors en contact avec la surface extérieure de l'embout 5. La collerette 53 est ménagée à l'extrémité de l'embout 5 et vient en saillie de ladite surface extérieure, ladite collerette 53 étant agencée pour coopérer avec la deuxième extrémité 93 du loquet 9 de sorte que lorsque l'embout 5 est inséré dans la prise gaz 1 et lorsque ladite prise gaz 1 est ouverte, la deuxième extrémité 92 du loquet 9 bloque le retrait de l'embout 5.

La deuxième extrémité 92 du loquet 9 est agencée de sorte qu'elle ne déborde pas dans la cavité 33 et ne gène pas l'introduction de l'embout 5 dans la prise gaz 1 lorsque la prise gaz 1 est fermée. La deuxième extrémité 92 du levier 9 est également agencée de sorte que lorsque le loquet 9 est en position déverrouillée, la deuxième extrémité 92 du loquet 9 déborde dans la cavité 33. Plus précisément, la deuxième extrémité 92 du loquet 9 « sort » de la cavité 33 uniquement lorsque la première extrémité 91 du loquet 9 coopère avec l'évidement 34 du boisseau 3.

Fonctionnement de la prise gaz 1 :
Lorsque l'embout 5 n'est pas inséré dans la prise 1, le boisseau 3 sous l'action du ressort 24 est dans une position fermée. Le loquet 9 est en position verrouillée et coopère avec l'évidement 34 afin de verrouiller la position fermée de la prise gaz 1.

Lorsque l'embout est inséré dans la prise gaz 1, la pointe diamant 52 vient en prise dans la rainure. L'utilisateur appuie alors sur le levier 93 afin de libérer la rotation du boisseau (le loquet se trouve ainsi dans sa position de déverrouillage). Parallèlement, l'appui sur le levier 93 entraîne la plongée de la deuxième extrémité 93 du loquet 9 dans la cavité 33, juste derrière la collerette 53, rendant alors impossible l'extraction de l'embout 5. Puis, la rotation de la prise gaz 1 par l'utilisateur entraîne la rotation du boisseau 3, jusqu'à une position ouverte dans laquelle le gaz circule dans la prise gaz 1.

L'utilisateur relâche alors le levier 93 et l'embout 5. La première extrémité 91 du loquet 9 repose alors sur la surface extérieure du boisseau et la deuxième extrémité déborde toujours dans la cavité 33, empêchant toujours le retrait de l'embout, comme illustré en figure 3.

L'embout 5 est également configuré pour que l'étanchéité soit totale au niveau de sa fixation dans le corps de la prise gaz 1.

Dans des modes de réalisation, l'embout 5 est spécifique et assure ainsi trois fonctions :
- une fonction de connexion,
- une fonction d'ouverture et de fermeture de l'arrivée du fluide gazeux par la mise en rotation du boisseau,
- une fonction d'étanchéité.

Dans des modes de réalisation, la spécificité de l'embout 5 est liée au fait que lui seul permet la mise en rotation du boisseau 3 tubulaire et le verrouillage du tuyau flexible dans la prise gaz 1 lorsque le robinet est ouvert par la rotation de l'embout. L'axe A de rotation du boisseau 3 tubulaire est parallèle à l'ouverture d'arrivée du fluide gazeux et au flexible au contraire des autres vannes utilisant un boisseau sphérique et une rotation dudit boisseau selon un axe perpendiculaire à la vanne.

Dans des modes de réalisation, la prise gaz 1 comporte un système de sécurité du type obturateur automatique intégré afin de respecter les normes en vigueur. Ce système de sécurité se présente sous la forme d'un clapet 8 disposé dans le boisseau 3 en amont de l'extrémité du boisseau dans laquelle est inséré l'embout 5. Le système de sécurité 8 est par ailleurs bien connu de l'homme du métier.

Dans des modes de réalisation, le clapet 8 de sécurité est un petit élément standard en matière plastique souple.

Dans des modes de réalisation, le clapet 8 est disposé dans l'embout 5 de raccordement. Dans ce cas, le clapet 8 n'est plus laissé à l'extérieur et gagne en durée de vie et en fiabilité.

Le fonctionnement de la prise gaz 1 selon l'invention est le suivant :
- connexion du flexible à la prise gaz 1 par introduction de l'embout 5 du flexible dans le corps 2 de la prise gaz 1 et de ce fait dans le boisseau 3,
- ouverture du robinet par rotation de l'embout 5 dans le sens horaire jusqu'à ce que celui-ci arrive sur une butée, positionnant sur « ouvert » la prise gaz 1 et
- fermeture du robinet par une rotation de l'embout du flexible dans le sens anti-horaire jusqu'à ce que celui-ci soit déverrouillé, positionnant sur « fermé » la prise gaz 1. Le flexible est alors déverrouillé.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Prise (1) gaz destinée à être raccordée à un réseau d'alimentation de fluide gazeux et permettant le branchement et le débranchement d'un embout (5) de raccordement qui alimente en fluide gazeux par tuyau flexible un appareil fonctionnant avec ledit fluide gazeux, la prise (1) gaz comportant :
- un corps (2) cylindrique creux dans lequel est inséré un boisseau (3) et ;
- une arrivée (22) de fluide gazeux,
le corps (2) creux étant ouvert à une extrémité (23) pour permettre l'insertion de l'embout (5) de raccordement, le boisseau (3) étant tubulaire et monté en rotation axiale dans le corps (2) creux pour ouvrir ou fermer l'arrivée (22) du fluide gazeux par la rotation axiale dudit embout (5) de raccordement, la prise (1) gaz comportant, de plus, des moyens de maintien en position (24) et des moyens de verrouillage (9), configurés pour permettre l'ouverture et la fermeture de l'arrivée du fluide gazeux et le verrouillage de l'embout (5) de raccordement dans le corps (2) de la prise gaz lorsque l'arrivée du fluide gazeux est ouverte, **caractérisée en ce que** les moyens de maintien en place sont formés par un ressort (24) fixé, d'une part, à l'intérieur du corps (2) et, d'autre part, à l'extrémité du boisseau opposée à celle disposée au niveau de l'ouverture (23) du corps afin de générer un couple entre le corps (2) et le boisseau (3), le ressort étant configuré de façon à ramener le boisseau en position fermée.

2. Prise (1) gaz selon la revendication 1, dans laquelle les moyens de verrouillage sont formés par un loquet (9) articulé en rotation sur le corps (2) selon un axe de rotation perpendiculaire au corps (2), comportant une première extrémité (91) du loquet (9) traversant le corps (2), au niveau d'une première ouverture (25) formée dans le corps (2) de la prise gaz, et comportant une deuxième extrémité (92), opposée à la première extrémité (91) du loquet (9) traversant le corps (2) au niveau d'une deuxième ouverture (26) formée dans le corps (2).

3. Prise (1) gaz selon la revendication 2, dans laquelle le loquet (9) est agencé pour basculer entre une première position de verrouillage dans laquelle la première extrémité (91) du loquet (9) coopère avec le boisseau (3) pour s'opposer à la rotation du boisseau (3) dans le corps (2) et une position de déverrouillage dans laquelle la première extrémité (91) du loquet (9) ne coopère plus avec le boisseau (3).

4. Prise (1) gaz selon l'une des revendications 2 ou 3, dans laquelle le boisseau (3) comporte sur sa surface extérieure un évidement (34) de forme complémentaire à la première extrémité (91) du loquet (9), la première extrémité (91) du loquet (9) venant coopérer avec ledit évidement (34) pour verrouiller en rotation le boisseau (3).

5. Prise (1) gaz selon l'une des revendications 2 à 4, dans laquelle les moyens de verrouillage comportent également un dispositif (93) de commande permettant de faire basculer le loquet (9) entre la position de verrouillage et la position de déverrouillage.

6. Prise (1) gaz selon une des revendications 1 à 5, dans laquelle une extrémité (31) du boisseau (3) disposée au niveau de l'ouverture (23) du corps (2) de la prise gaz (1) est adaptée pour coopérer avec l'embout (5) de raccordement du tuyau flexible.

7. Prise (1) gaz selon la revendication 6, dans laquelle l'extrémité (31) du boisseau (3) forme un espace (33), entre une surface externe du boisseau et une surface interne du corps, dans lequel vient s'insérer l'embout (5) de raccordement.

8. Prise (1) gaz selon l'une des revendications 1 à 7, configurée pour que la rotation de l'embout (5) permette de verrouiller ladite prise grâce aux moyens de verrouillage (9).

9. Prise (1) gaz selon la revendication 4 ou l'une des revendications 5 à 8, lorsqu'elles dépendent de la revendication 4, dans laquelle la deuxième extrémité (92) du loquet (9) est agencée pour coopérer avec la surface extérieure de l'embout (5) lorsque ledit embout (5) est inséré dans la prise afin de bloquer la première extrémité (91) du loquet (9) en contact avec l'évidement (34), empêchant ainsi toute rotation du boisseau (3) lorsque l'embout (3) est inséré.

10. Ensemble de raccordement entre un réseau de distribution de fluide gazeux et un appareil fonctionnant avec ledit fluide gazeux, comportant une prise (1) gaz selon l'une des revendications 1 à 9 et un embout (5).

11. Ensemble de raccordement selon la revendication 10, dans lequel l'embout (5) comporte une pointe diamant (52) saillante de l'embout (5) et en ce que l'extrémité (31) du boisseau (3) disposée au niveau de l'ouverture (23) du corps (2) comporte une encoche de forme complémentaire à la pointe diamant (52), la pointe diamant (52) et l'encoche coopérant pour solidariser en rotation l'embout (5) et le boisseau (3) lorsque l'embout (5) est associé avec l'extrémité (31) du boisseau (3).

12. Ensemble de raccordement selon l'une des revendications 10 ou 11, lorsqu'elles dépendent de la revendication 2, dans lequel l'embout (5) comporte, sur la surface extérieure, une collerette (53) venant en saillie de ladite surface extérieure et formant une rainure annulaire non continue, ladite collerette (53) étant agencée pour coopérer avec la deuxième extrémité (93) du loquet (9) de sorte que lorsque l'embout (5) est inséré dans la prise (1) gaz et lorsque ladite prise (1) gaz est ouverte, la deuxième extrémité (92) du loquet (9) bloque le retrait de l'embout (5).

## Patentansprüche

1. Gasanschluss (1), der dazu bestimmt ist, an ein Versorgungsnetz für gasförmige Medien angeschlossen zu werden, und der das Stecken und Trennen eines Anschlussstücks (5) ermöglicht, das ein Gerät über einen flexiblen Schlauch mit einem gasförmigen Medium versorgt, das mit dem besagten gasförmigen Medium betrieben wird, wobei der Gasanschluss (1) Folgendes umfasst:
- einen zylindrischen Hohlkörper (2), in den ein Drehschieber (3) eingesetzt ist und;
- eine Zufuhr (22) eines gasförmigen Mediums,
wobei der Hohlkörper (2) an einem Ende (23) offen ist, um das Einführen des Anschlussstücks (5) zu ermöglichen, wobei der Drehschieber (3) röhrenförmig ist, und axial drehbar im Hohlkörper (2) montiert ist, um die Zufuhr (22) des gasförmigen Mediums durch die axiale Drehung des besagten Anschlussstücks (5) zu öffnen oder zu schließen, wobei der Gasanschluss (1) darüber hinaus Mittel zur Lageerhaltung (24) und Mittel zum Verriegeln (9) umfasst, die konfiguriert sind, um das Öffnen und das Schließen der Zufuhr des gasförmigen Mediums und das Verriegeln des Anschlussstücks (5) im Körper (2) des Gasanschlusses zu ermöglichen, wenn die Zufuhr des gasförmigen Mediums offen ist, **dadurch gekennzeichnet, dass** die vorhandenen Mittel zur Lageerhaltung durch eine Feder (24) gebildet werden, die einerseits im Inneren des Körpers (2), und andererseits am Ende des Drehschiebers befestigt ist, das gegenüber jenem liegt, das im Bereich der Öffnung (23) des Körpers angeordnet ist, wobei die Feder konfiguriert ist, um den Drehschieber in die geschlossene Position zurückzubringen.

2. Gasanschluss (1) nach Anspruch 1, wobei die Mittel zum Verriegeln durch einen Riegel (9) gebildet werden, der um eine Drehachse drehbar am Körper (2) angelenkt ist, die senkrecht zum Körper (2) verläuft, ein erstes Ende (91) des Riegels (9) umfassend, das im Bereich einer ersten Öffnung (25) durch den Körper (2) führt, die im Körper (2) des Gasanschlusses gebildet wird, und ein zweites Ende (92) umfassend, das gegenüber dem ersten Ende (91) des Riegels (9) liegt, und im Bereich einer zweiten Öffnung (26) durch den Körper (2) führt, die im Körper (2) gebildet wird.

3. Gasanschluss (1) nach Anspruch 2, wobei der Riegel (9) angeordnet ist, um sich zwischen einer ersten Verriegelungsposition, in der das erste Ende (91) des Riegels (9) mit dem Drehschieber (3) zusammenwirkt, um sich der Drehung des Drehschiebers (3) im Körper (2) zu widersetzen, und einer Freigabeposition zu drehen, in der das erste Ende (91) des Riegels (9) nicht mehr mit dem Drehschieber (3) zusammenwirkt.

4. Gasanschluss (1) nach einem der Ansprüche 2 oder 3, wobei der Drehschieber (3) an seiner Außenfläche eine Ausnehmung (34) in einer ergänzenden Form zum ersten Ende (91) des Riegels (9) umfasst, wobei das erste Ende (91) des Riegels (9) mit der besagten Ausnehmung (34) zusammenwirkt, um die Drehung des Drehschiebers (3) zu verriegeln.

5. Gasanschluss (1) nach einem der Ansprüche 2 bis 4, wobei die Mittel zum Verriegeln auch eine Steuervorrichtung (93) umfassen, die es ermöglicht, den Riegel (9) zwischen der Verriegelungsposition und der Freigabeposition zu verdrehen.

6. Gasanschluss (1) nach einem der Ansprüche 1 bis 5, wobei ein Ende (31) des Drehschiebers (3), das im Bereich der Öffnung (23) des Körpers (2) des Gasanschlusses (1) angeordnet ist, ausgeführt ist, um mit dem Anschlussstück (5) des flexiblen Schlauches zusammenzuwirken.

7. Gasanschluss (1) nach Anspruch 6, wobei das Ende (31) des Drehschiebers (3) einen Raum (33) zwischen einer Außenfläche des Drehschiebers und einer Innenfläche des Körpers bildet, in den das Anschlussstück (5) eingeführt wird.

8. Gasanschluss (1) nach einem der Ansprüche 1 bis 7, der konfiguriert ist, damit die Drehung des Anschlussstücks (5) es ermöglicht, den besagten Anschluss dank der Mittel zum Verriegeln (9) zu verriegeln.

9. Gasanschluss (1) nach Anspruch 4 oder einem der Ansprüche 5 bis 8, wenn sie von Anspruch 4 abhängig sind, wobei das zweite Ende (92) des Riegels (9) angeordnet ist, um mit der Außenfläche des Anschlussstücks (5) zusammenzuwirken, wenn das besagte Anschlussstück (5) in den Anschluss eingeführt wird, um das erste Ende (91) des Riegels (9) in Kontakt mit der Ausnehmung (34) zu blockieren, wodurch die gesamte Drehung des Drehschiebers (3) verhindert wird, wenn das Anschlussstück (3) eingeführt ist.

10. Anschlusseinheit zwischen einem Verteilungsnetz für gasförmige Medien und einem Gerät, das mit dem besagten gasförmigen Medium betrieben wird, einen Gasanschluss (1) nach einem der Ansprüche 1 bis 9 und ein Anschlussstück (5) umfassend.

11. Anschlusseinheit nach Anspruch 10, wobei das Anschlussstück (5) eine Diamantspitze (52) umfasst, die aus dem Anschlussstück (5) hervorragt, und dadurch, dass das Ende (31) des Drehschiebers (3), das im Bereich der Öffnung (23) des Körpers (2) angeordnet ist, eine Einkerbung in einer ergänzenden Form zur Diamantspitze (52) umfasst, wobei die Diamantspitze (52) und die Einkerbung zusammenwirken, um das Anschlussstück (5) und den Drehschieber (3) drehfest zu verbinden, wenn das Anschlussstück (5) dem Ende (31) des Drehschiebers (3) verbunden ist.

12. Anschlusseinheit nach einem der Ansprüche 10 oder 11, wenn sie von Anspruch 2 abhängig sind, wobei das Anschlussstück (5) an der Außenfläche einen Kragen (53) umfasst, der aus der besagten Außenfläche hervorspringt, und eine nicht durchgehende Ringnut bildet, wobei der besagte Kragen (53) angeordnet ist, um mit dem zweiten Ende (93) des Riegels (9) zusammenzuwirken, sodass, wenn das Anschlussstück (5) in den Gasanschluss (1) eingeführt wird, und wenn der besagte Gasanschluss (1) offen ist, das zweite Ende (92) des Riegels (9) die Abnahme des Anschlussstücks (5) blockiert.

## Claims

1. Gas socket (1) designed to be connected to a gaseous fluid supply network and enabling the connection and disconnection of a connection end-fitting (5) that supplies gaseous fluid via a flexible hose to a device using said gaseous fluid, the gas socket (1) comprising:
- a hollow cylindrical body (2) into which a sleeve (3) is inserted; and
- a gaseous fluid inlet (22),
the hollow body (2) being open at one extremity (23) to allow the connection end-fitting (5) to be inserted, the sleeve (3) being tubular and mounted in axial rotation in the hollow body (2), the gas socket (1) also comprising position-holding means (24) and locking means (9), configured to allow the gaseous fluid inlet to be opened and closed, and the connection end-fitting (5) to be locked inside the body (2) of the gas socket when the gaseous fluid inlet is open, **characterized in that** the means for holding in position are formed of a spring (24) fixed, firstly, inside the body (2) and, secondly, to the extremity of the sleeve opposite the extremity positioned at the opening (23) of the body, the spring being configured to bring the sleeve into the closed position.

2. Gas socket (1) according to claim 1, wherein the locking means are formed of a latch (9) articulated in rotation on the body (2) along an axis of rotation perpendicular to the body (2), comprising a first extremity (91) of the latch (9) traversing the body (2), at the location of a first opening (25) formed in the body (2) of the gas socket, and comprising a second extremity (92), opposite the first extremity (91) of the latch (9), traversing the body (2) at the location of a second opening (26) formed in the body (2).

3. Gas socket (1) according to claim 2, wherein the latch (9) is arranged to switch between a first locked position, in which the first extremity (91) of the latch (9) cooperates with the sleeve (3) to prevent the rotation of the sleeve (3) in the body (2), and an unlocked position, in which the first extremity (91) of the latch (9) no longer cooperates with the sleeve (3).

4. Gas socket (1) according to one of claims 2 or 3, wherein the sleeve (3) comprises on its outer surface a recess (34) whose shape is complementary to the first extremity (91) of the latch (9), the first extremity (91) of the latch (9) cooperating with said recess (34) to lock the sleeve (3) in rotation.

5. Gas socket (1) according to one of claims 2 to 4, wherein the locking means also comprise a control device (93) making it possible to switch the latch (9) between the locked position and the unlocked position.

6. Gas socket (1) according to one of claims 1 to 5, wherein an extremity (31) of the sleeve (3) positioned at the opening (23) of the body (2) of the gas socket (1) is designed to cooperate with the end-fitting (5) for connecting the flexible hose.

7. Gas socket (1) according to claim 6, wherein the extremity (31) of the sleeve (3) forms a space (33), between an outer surface of the sleeve and an inner surface of the body, into which the connection end-fitting (5) is inserted.

8. Gas socket (1) according to one of claims 1 to 7, configured such that the rotation of the connection end-fitting (5) makes it possible to lock said gas socket using the locking means (9).

9. Gas socket (1) according to claim 4, or according to one of claims 5 to 8 when they are dependent on claim 4, wherein the second extremity (92) of the latch (9) is arranged to cooperate with the outer surface of the end-fitting (5) when said end-fitting (5) is inserted into the socket to block the first extremity (91) of the latch (9) in contact with the recess (34), thus preventing any rotation of the sleeve (3) when the end-fitting (3) is inserted.

10. Connection assembly between a gaseous fluid distribution network and a device using said gaseous fluid, comprising a gas socket (1) according to one of claims 1 to 9, and an end-fitting (5).

11. Connection assembly according to claim 10, wherein the end-fitting (5) comprises a diamond point (52) protruding from the end-fitting (5), and in that the extremity (31) of the sleeve (3) positioned at the opening (23) of the body (2) comprises a notch having a complementary shape to the diamond point (52), the diamond point (52) and the notch cooperating to secure the end-fitting (5) and the sleeve (3) in rotation when the end-fitting (5) is linked to the extremity (31) of the sleeve (3).

12. Connection assembly according to one of claims 10 to 11 when they are dependent on claim 2, wherein the end-fitting (5) comprises, on the outer surface, a flange (53) protruding from said outer surface and forming a non-continuous annular groove, said flange (53) being arranged to cooperate with the second extremity (93) of the latch (9) such that, when the end-fitting (5) is inserted into the gas socket (1) and when said gas socket (1) is open, the second extremity (92) of the latch (9) blocks the removal of the end-fitting (5).
